(19) Europäisches Patentamt / European Patent Office / Office européen des brevets

(11) **EP 3 729 241 B1**

(12) **FASCICULE DE BREVET EUROPEEN**

(45) Date de publication et mention de la délivrance du brevet:
**28.05.2025 Bulletin 2025/22**

(51) Classification Internationale des Brevets (IPC):
**G06F 3/01** *(2006.01)* **G06F 3/041** *(2006.01)*
**G06F 3/043** *(2006.01)*

(21) Numéro de dépôt: **18839843.2**

(22) Date de dépôt: **20.12.2018**

(52) Classification Coopérative des Brevets (CPC):
**G06F 3/016; G06F 3/0414; G06F 3/0433;**
**G06F 3/0488;** G06F 2203/014

(86) Numéro de dépôt international:
**PCT/FR2018/053478**

(87) Numéro de publication internationale:
**WO 2019/122762 (27.06.2019 Gazette 2019/26)**

(54) **DISPOSITIF SURFACIQUE OFFRANT UNE DEFORMATION LOCALISEE AMELIOREE**

FLÄCHIGE VORRICHTUNG MIT VERBESSERTER LOKALISIERTER VERFORMUNG

AREAL DEVICE OFFERING IMPROVED LOCALIZED DEFORMATION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 21.12.2017 FR 1762877
13.06.2018 FR 1855186

(43) Date de publication de la demande:
28.10.2020 Bulletin 2020/44

(73) Titulaire: **Commissariat à l'Energie Atomique et aux Energies Alternatives**
**75015 Paris (FR)**

(72) Inventeur: **HUDIN, Charles**
**75013 PARIS (FR)**

(74) Mandataire: **Brevalex**
**Tour Trinity**
**1 B Place de la Défense**
**92400 Courbevoie (FR)**

(56) Documents cités:
US-A1- 2011 090 167    US-A1- 2014 062 910

• **WÖCKEL S ET AL:** "Modelling of time reversal for localized tactile feedback on displays", PROCEDIA ENGINEERING, vol. 120, 9 September 2015 (2015-09-09), pages 302 - 305, XP029268365, ISSN: 1877-7058, DOI: 10.1016/J.PROENG.2015.08.621

• **BAI MINGSIAN ET AL:** "Impact localization combined with haptic feedback for touch panel applications based on the time-reversal approach", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 129, no. 3, 9 March 2011 (2011-03-09), pages 1297 - 1305, XP012136380, ISSN: 0001-4966, DOI: 10.1121/1.3533725

• **HUDIN CHARLES ET AL:** "Localized Tactile Feedback on a Transparent Surface through Time-Reversal Wave Focusing", IEEE TRANSACTIONS ON HAPTICS, IEEE, USA, vol. 8, no. 2, 1 April 2015 (2015-04-01), pages 188 - 198, XP011584737, ISSN: 1939-1412, [retrieved on 20150617], DOI: 10.1109/TOH.2015.2411267

## Description

### DOMAINE TECHNIQUE ET ÉTAT DE LA TECHNIQUE ANTÉRIEURE

La présente invention se rapporte à un dispositif surfacique offrant une déformation localisée améliorée, et en particulier à une interface de stimulation tactile offrant une localisation de la stimulation améliorée.

Une interface de stimulation tactile est destinée à restituer une information tactile, telle qu'une texture, un relief, une rugosité variable dans le temps et/ou l'espace, une illusion d'appuyer sur un matériau souple, de presser une touche...

De telles interfaces sont utilisées par exemple dans le domaine des interfaces homme-machines. Elles peuvent également être utilisées dans les domaines de l'optique, de l'acoustique, de la chimie, et de la fabrication automatisée...

Une interface tactile comporte une surface, par exemple munie d'un écran. Un utilisateur interagit avec l'interface en appliquant un ou plusieurs doigts sur l'interface, par exemple pour faire une sélection en appuyant sur la représentation d'u bouton. D'une part, on souhaite pouvoir reproduire de manière réaliste « le clique » de sélection. D'autre part on souhaite que l'utilisateur puisse avoir plusieurs doigts en contact avec l'interface, pour pouvoir réaliser une interaction multidigitale avec l'interface, et qu'il ressente des sensations bien distinctes les uns des autres.

Il existe des interfaces tactiles mettant en œuvre un ou plusieurs actionneurs sous la surface tactile, par exemple des actionneurs électromagnétiques ou piézoélectriques, destinés à faire vibrer toute la surface. Si plusieurs doigts sont en contact avec la surface, ils perçoivent tous la même sensation.

Il existe également des interfaces comportant une matrice d'actionneurs, chacun dédié à la stimulation en une zone de l'interface. Le doigt est soit directement en contact avec les actionneurs, soit isolé par une surface souple pouvant se déformer localement. Ces dispositifs ne permettent pas de réaliser un retour localisé sur une surface rigide de type plaque telle qu'un pavé tactile (« track pad » en terminologie anglo-saxonne).

En remplaçant la surface souple par une plaque rigide, par exemple une plaque en verre, les vibrations produites localement par un actionneur se propagent et se réverbèrent dans toute la surface. Ces vibrations sont alors perçues par tous les doigts, même si un seul actionneur sous un doigt donné a été activé.

Par ailleurs, si plusieurs actionneurs sont activés pour stimuler plusieurs doigts simultanément, les effets des vibrations de chaque actionneur s'additionnent à celle de l'autre actionneur, dans les zones où l'on souhaite effectivement générer une stimulation, et également dans les autres zones. Ainsi, même les doigts stimulés ont une stimulation « polluée ».

Il existe des interfaces tactiles utilisant le procédé de retournement temporel, par exemple décrites dans le document C. Hudin, J. Lozada, et V. Hayward, « Localized Tactile Feedback on a Transparent Surface through Time-Reversal Wave Focusing », IEEE Transactions on Haptics, vol. 8, no 2, p. 188 198, avr. 2015. Cette interface permet de localiser la stimulation. L'interface comporte une plaque de verre et des actionneurs disposés en contact avec et en périphérie de la plaque de verre. Les actionneurs piézoélectriques propagent des ondes acoustiques dans la plaque de verre. La mise en œuvre d'un procédé de retournement temporel présente l'avantage de permettre de générer une vibration de manière localisée sur la surface de la plaque et permet de stimuler séparément les différents doigts, ce retour tactile est également désigné « retour tactile localisé multitouch ». Cette interface donne satisfaction cependant cette interférence nécessite des fréquences comprises typiquement entre 20 kHz et 150 kHz. Un bruit audible est donc généré lors que le ou les doigts sont en contact avec la plaque, ce qui produit des sensations moins naturelles que des vibrations basses fréquences telles que celle produites par la réponse mécanique d'une touche de clavier. En effet, les vibrations basses fréquences, dans la gamme de sensibilité tactile, généralement entre 0 kHz et 1 kHz, permettent, lorsqu'elles sont corrélées à une action de l'utilisateur, telle qu'une force, un déplacement, un contact, de simuler la présence de touches ou de relief à la surface d'un écran. Un dispositif similaire est divulgué par US2011/090167A1.

Le document H. Nicolau, K. Montague, T. Guerreiro, A. Rodrigues, and V. L. Hanson, "HoliBraille: multipoint vibrotactile feedback on mobile devices," 2015, pp. 1-4 propose de résoudre le problème en plaçant un actionneur sous chaque doigt et d'isoler mécaniquement chaque actionneur par une surface absorbant les vibrations. L'activation d'un actionneur produit alors un stimulus perçu uniquement par le doigt en contact direct. Dans ce cas le doigt est donc en contact direct avec l'actionneur et non avec la surface tactile avec laquelle il interagit. Par ailleurs, amortir suffisamment des vibrations basses fréquences nécessite un important volume de mousse, peu compatible avec les contraintes d'encombrement dans un dispositif mobile, tel qu'une tablette tactile ou un téléphone portable type smartphone.

### EXPOSÉ DE L'INVENTION

L'invention est définie dans les revendications indépendantes. Les revendications dépendantes définissent des modes de réalisation avantageux. C'est par conséquent un but de la présente invention d'offrir un dispositif surfacique offrant une localisation de la déformation de sa surface améliorée.

C'est également un but de la présenté invention d'offre une interface de stimulation tactile permettant de générer une localisation des stimulations améliorée, tout en présentant une surface lisse.

Le but énoncé ci-dessus est atteint par une interface de stimulation tactile comportant une surface destinée à être explorée tactilement par un utilisateur et au moins un actionneur destiné à générer une vibration au niveau d'une zone de la surface où l'on souhaite générer une stimulation tactile, des moyens de commande dudit au moins un actionneur, comprenant des moyens de calcul des signaux de commande mettant en œuvre une opération de filtrage inverse, et envoyant des signaux de commande à l'actionneur. Le filtrage inverse permet de compenser les effets de propagation.

Dans un mode de réalisation mettant en œuvre plusieurs actionneurs situés chacun sous une zone de la surface, lorsque l'on souhaite stimuler un doigt situé au-dessus de l'un des actionneurs, l'actionneur est activé, mais les autres actionneurs situés sous les doigts que l'on ne souhaite pas stimuler sont également activés de sorte à annuler les vibrations dans ces zones. En outre l'actionneur activé pour stimuler effectivement un doigt est commandé en prenant compte l'effet de l'activation des autres actionneurs.

Dans un autre mode de réalisation d'interface mettant en œuvre plusieurs actionneurs, le ou les doigts ne sont pas situés au-dessus d'un ou plusieurs actionneurs et lorsque l'on souhaité stimulé un doigt, tous les actionneurs reçoivent un signal pour, d'une part, générer un vibration de la zone de la surface en contact avec le doigt à stimuler et, d'autre part, annuler les vibrations dans les zones de la surface en contact avec les autres doigts que l'on ne souhaite pas stimuler. Dans ce mode de réalisation, les points de contrôle ne sont pas co-localisés avec les actionneurs.

En d'autres termes, l'invention n'empêche pas la transmission ou la propagation des ondes dans l'ensemble de la surface mais annule, grâce aux différents actionneurs, les vibrations aux points où l'on ne souhaite pas générer de stimulation. Les actionneurs sont donc utilisés à la fois pour produire des vibrations destinés à générer une stimulation souhaitée et pour annuler des vibrations.

L'invention permet donc de compenser la réverbération des ondes et leur propagation qui entrainent un phénomène d'effet croisé '(« cross talk» en terminologie anglo-saxonne), c'est-à-dire une pollution du déplacement souhaité en un point donné par le signal envoyé à un autre actionneur en un autre point de la plaque.

L'usage de ce filtre inverse permet donc d'obtenir, en différente zones de la surface, que des actionneurs soient situés sous ces zones, une partie d'entre elles ou sous aucune d'entre elles, un déplacement corrigé des effets de dispersion et de réverbérations.

Grâce à l'invention, le déplacement obtenu dans la zone sur laquelle se trouve le doigt à stimuler est indépendant des déplacements obtenus au centre des autres actionneurs. Les autres doigts ne sont alors pas stimulés Il est alors possible de réaliser une interface tactile mutlidigitale, grâce à un cloisonnement des stimulations d'une zone à l'autre.

Il est aussi possible d'envisager le cas d'une interface à un actionneur. En effet, la génération des signaux de commande de l'unique actionneur permet de compenser la distorsion du signal due à la réponse de l'actionneur et à la réverbération des ondes dans la surface.

L'interface tactile présente un encombrement adapté aux applications tactiles, son volume n'est pas augmenté par rapport aux interfaces existantes. En effet, les actionneurs peuvent être collés directement à la surface tactile et l'amortissement des vibrations n'est plus nécessaire, la mise en œuvre de moyens d'isolation volumineux n'est donc plus requise.

La présente invention concerne ainsi un dispositif surfacique à déformation localisée tel que défini par la revendication 1.

De préférence, la surface d'interaction comporte plusieurs zones d'interaction disposées les unes par rapport aux autres, de sorte qu'elles couvrent sensiblement toute la surface d'interaction et au moins autant d'actionneurs que de zones d'interaction, lesdits moyens de calcul mettant en œuvre une opération de filtrage inverse, de sorte à émettre, à partir d'un ou de déplacements souhaités d'une ou plusieurs zones d'interaction, des signaux de contrôle compensant au moins partiellement la distorsion, la réverbération et la propagation des ondes.

Dans un exemple de réalisation le ou les actionneurs sont disposés sous ladite ou lesdites zones d'interaction, à l'opposé de la surface d'interaction.

De préférence, la surface du ou des actionneurs correspond sensiblement à celle du ou des éléments d'interaction destinés à entrer en contact avec la surface d'interaction.

Dans le cas où les éléments sont des doigts, la surface du ou des actionneurs est avantageusement comprise entre 1 cm$^2$ et quelques cm$^2$.

Dans un autre exemple de réalisation, la ou les zones d'interaction sont distantes du ou des actionneurs dans le plan de la surface d'interaction.

De manière très avantageuse, le dispositif comporte des moyens de détection du contact entre au moins la zone d'interaction et un élément d'interaction extérieur, et de manière préférée, des moyens de détection du contact entre le ou les éléments d'interaction extérieurs et toutes les zones d'interaction.

Le dispositif peut comporter des moyens de mesure de la force d'appui du ou des éléments extérieurs avec le ou les zones d'interaction pour déterminer la stimulation souhaitée.

Par exemple, les zones d'interaction et les actionneurs ont une forme d'hexagone, ce qui permet d'optimiser la couverture de la surface d'interaction.

Dans un exemple de réalisation, les actionneurs sont des actionneurs piézoélectriques. Les actionneurs peuvent comporter des films minces transparents les rendant adaptés à la fabrication d'écrans tactiles.

Dans un autre exemple de réalisation, les actionneurs sont des actionneurs électromagnétiques comportant chacun une bobine et un aimant, l'aimant ou la bobine étant apte à exercer un effort sur la plaque.

Dans un exemple de réalisation, une partie au moins de chaque actionneur est fixée directement à la plaque.

Le dispositif peut comporter un écran disposé sous la plaque à l'opposé de la surface d'interaction. L'écran peut être fixé à la plaque à l'opposé de la surface d'interaction. Les actionneurs peuvent être fixés sur l'écran à l'opposé de la face de l'écran en contact avec la plaque.

La présente invention a également pour objet une interface de stimulation tactile ou un pavé tactile tel que défini par la revendication 12.

La présente divulgation concerne par ailleurs un procédé de fonctionnement d'un dispositif surfacique à déformation localisée comportant une plaque portant une surface d'interaction avec un ou plusieurs éléments d'interaction extérieurs, comportant au moins une zone d'interaction avec l'extérieur, au moins un actionneur en contact avec la surface d'interaction et apte à provoquer une déformation dans une direction orthogonale au plan de la plaque, comportant :

- détection d'un contact entre ladite zone d'interaction et l'élément d'interaction extérieur,
- choix d'un déplacement souhaité de ladite zone d'interaction,
- génération d'un signal de contrôle par une opération de filtrage inverse à partir du déplacement souhaité,
- application du signal de contrôle audit actionneur.

La présente invention a également pour objet le procédé de fonctionnement d'un dispositif surfacique à déformation localisée défini par la revendication 13.

Dans un exemple de fonctionnement, tout ou partie des actionneurs sont disposés sous les zones d'interaction, et des signaux de contrôle sont appliqués à tout ou partie des actionneurs situés sous une zone d'interaction avec laquelle un contact avec un élément extérieur a été détecté.

**BRÈVE DESCRIPTION DES DESSINS**

La présente invention sera mieux comprise sur la base de la description qui va suivre et des dessins en annexe sur lesquels :

- la figure 1 est une vue de dessus d'une représentation schématique d'une interface tactile mettant en œuvre quatre actionneurs, selon un premier mode de réalisation de la présente invention,
- la figure 2 est une représentation du déplacement souhaité en μm en fonction du temps en ms,
- la figure 3A représente graphiquement les signaux émis en V en fonction du temps en ms, pour les actionneurs A1 à A4 pour une interface de l'état de la technique en vue d'obtenir le déplacement de la figure 2,
- la figure 3B représente graphiquement les signaux émis en V en fonction du temps en ms, pour les actionneurs A1 à A4 pour une interface selon l'invention en vue d'obtenir le déplacement de la figure 2,
- les figures 4A sont des représentations graphiques du déplacement mesuré au centre d'une zone au-dessus de chaque actionneur, en actionnant les actionneurs A1 à A4 de l'interface de la figure 1 avec les signaux de la figure 3B,
- les figures 4B à 4D sont des représentations graphiques du déplacement mesuré au centre des zones Z1 à Z3 lorsque le déplacement de la figure 2 est souhaité dans les zones Z2, Z3, Z4 respectivement, en actionnant les actionneurs A2, A3, A4 de l'interface de la figure 1,
- les figures 5A sont des représentations graphiques du déplacement mesuré au centre d'une zone au-dessus de chaque actionneur, en actionnant les actionneurs A1, A2, A3 et A4 avec les signaux de la figure 3A,
- les figures 5B à 5D sont des représentations graphiques du déplacement mesuré au centre des zones au-dessus de chaque actionneur, lorsque le déplacement souhaité de la figure 2 est souhaité dans les zones Z2, Z3, Z4 respectivement, en actionnant les actionneurs A2, A3, A4 de l'interface de l'état de la technique,
- la figure 6 est une représentation schématique des étapes de fonctionnement d'une interface tactile selon un autre exemple de la présente invention,
- les figures 7A à 7D sont des vues en coupe selon un plan orthogonal au plan de la surface tactile de différents exemples de réalisation de structures d'une interface tactile selon la présente invention,
- la figure 8 est une vue de dessus d'une interface tactile selon un deuxième mode de réalisation selon l'invention,
- la figure 9A est une représentation schématique de deux interfaces selon l'invention avec des dispositions matricielles des actionneurs de deux tailles différentes,
- la figure 9B est une représentation graphique du ratio d'énergie en dB de l'ensemble des signaux de pilotage nécessaire au contrôle de deux points disposés aléatoirement sur la plaque pour les deux interfaces de la figure 9A,
- la figure 10A est une représentation schématique de deux interfaces de l'état de la technique dans lesquelles les actionneurs de deux tailles différentes sont disposés sur les bords de l'interface,
- la figure 10B est une représentation graphique du ratio d'énergie en dB de l'ensemble des signaux de pilotage nécessaire au contrôle de deux points disposés aléatoirement sur la plaque pour les deux interfaces de la figure 10A.

## EXPOSÉ DÉTAILLÉ DE MODES DE RÉALISATION PARTICULIERS

Dans la description qui va suivre, l'invention sera décrite plus particulièrement dans une application à une interface tactile, mais la présente invention s'applique à d'autres domaines tels que, par exemple, la micromanipulation ou l'optique.

Dans le cas d'une interface tactile, il sera considéré que l'utilisateur interagit avec l'interface tactile avec ses doigts. Il sera compris qu'il pourrait interagir avec d'autres parties de son corps.

Dans la présente demande, les expressions « zone d'interaction », « zone de stimulation » et « point de contrôle » sont synonymes.

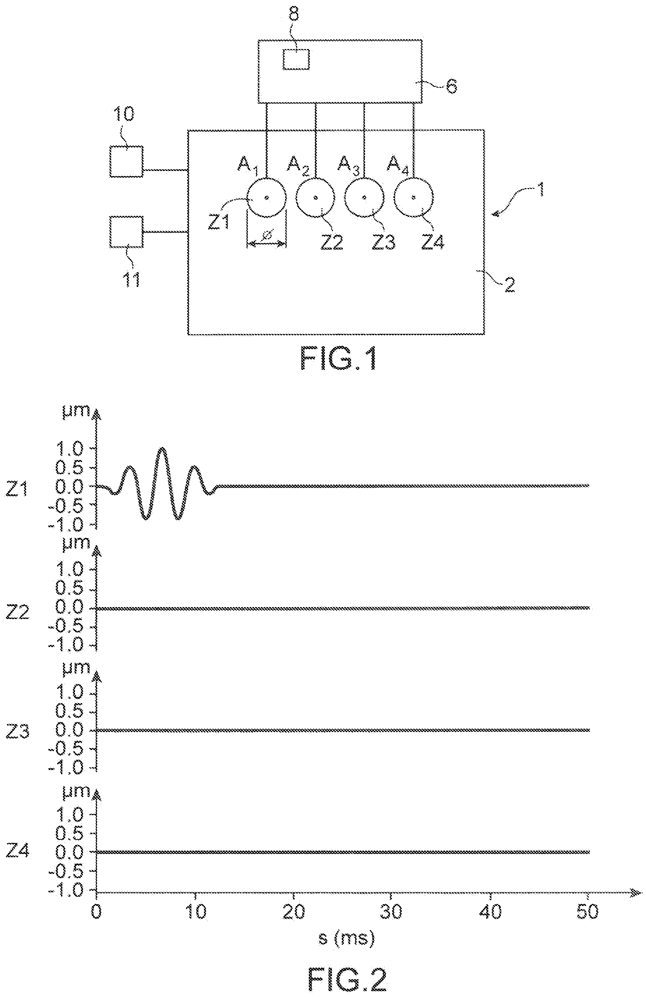

Sur la figure 1, on peut voir une représentation schématique d'une vue de dessus d'un premier mode de réalisation d'une interface tactile selon l'invention, comportant une plaque 1, par exemple en verre, portant sur une de ses faces la surface d'interaction avec l'extérieur, désignée surface tactile, quatre actionneurs A1, A2, A3 et A4 disposés sous la plaque en verre, par exemple fixés sur la surface de la plaque 1 opposée à la surface tactile 2. L'interface tactile comporte également des moyens de contrôle 6 de chacun des actionneurs comprenant des moyens de calcul 8 de signaux de commande.

Le matériau de plaque est choisi de telle sorte que qu'il permet à des vibrations basses fréquences, typiquement inférieures à <1 kHz, de se propager sur quelques cm. Le matériau peut être un matériau souple ou rigide.

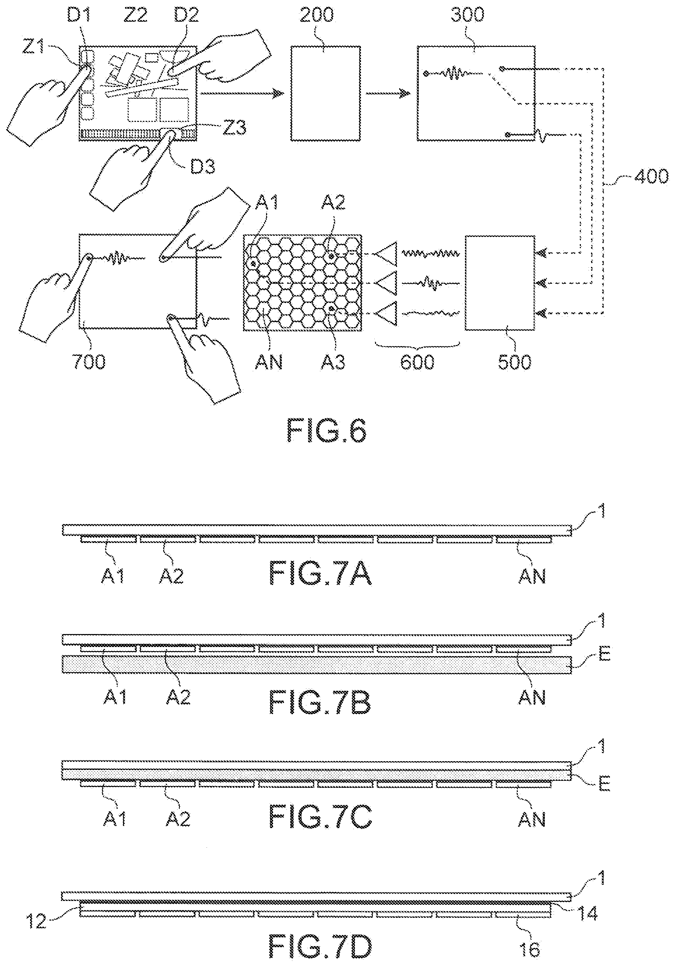

Les actionneurs sont tels qu'ils sont aptes, lorsqu'ils sont activés, à exercer un effort sur la plaque dans une direction hors-plan, i.e. orthogonale au plan de la plaque. Le plan de la plaque est le plan s'étendant parallèlement à sa plus grande surface. Sur les figures 7A à 7D, on peut voir plusieurs exemples d'interface selon l'invention vus de côté. Les actionneurs sont aptes à exercer un effort vers le haut et/ou le bas dans la représentation des figures 7A à 7D.

Comme cela sera décrit par la suite, les actionneurs peuvent être en contact direct avec la plaque ou non.

Dans l'exemple représenté, les actionneurs sont alignés le long d'un axe.

Les actionneurs sont par exemple des actionneurs piézoélectriques.

L'utilisateur est destiné à interagir avec la surface tactile 2, par exemple en appuyant à certains endroits de la surface désignées Z1, Z2, Z3, Z4. Les actionneurs A1 à A4 sont disposés à l'aplomb des zones Z1 à Z4 respectivement et sont destinés à être actionnés pour stimuler tactilement les doigts en contact avec les zones. La surface des zones Z1 à Z4 est égale à la surface des actionneurs A1 à A4.

De préférence, la surface des actionneurs correspond à la surface avec laquelle les doigts entrent en contact avec la surface tactile, de sorte qu'un seul doigt à la fois soit en contact avec une zone Z1 à Z4. Par exemple, les dimensions extérieures d'un actionneur sont de l'ordre du cm, par exemple un disque de diamètre de l'ordre du cm ou un carré de côté de l'ordre du cm. Ainsi la surface des actionneurs par laquelle ils vont agir sur la plaque est de préférence comprise entre 1 cm² et quelques cm².

Par exemple les actionneurs ont une forme de disque de diamètre Φ 2 cm, et par exemple la surface tactile a une longueur de 15 cm et une largeur de 10,5 cm.

Comme cela sera décrit par la suite, l'invention peut activer les actionneurs de sorte à contrôler la stimulation tactile de chaque zone située au-dessus d'un actionneur. Plus la surface couverte par les actionneurs est grande, meilleure est la maîtrise de la stimulation tactile sur la surface tactile. Les actionneurs peuvent avoir toute forme, en forme de disque de polygone...Par exemple, les actionneurs sont de forme hexagonale de sorte à assurer un pavage maximal sous la surface tactile comme cela est représenté sur la figure 6.

Les moyens de calcul 8 mettent en œuvre une opération de filtrage inverse pour déterminer les signaux de contrôle. Les moyens de calcul mettent en œuvre également un algorithme de synthèse des vibrations déterminant le signal souhaité en une zone, en fonction de la stimulation souhaitée dans cette zone, et prenant par exemple en compte la force d'appui sur cette zone, la vitesse de mouvement des doigts comme cela sera décrit ci-dessous. Ce type d'algorithme est bien connu de l'homme du métier et ne sera pas décrit en détail.

Nous allons décrire un exemple de fonctionnement d'une interface tactile sans moyens de calcul 8 appliquant une opération de filtrage inverse, et avec les moyens de calcul 8 appliquant l'opération de filtrage inverse. Dans cet exemple on souhaite obtenir les déplacements dans les zones Z1 à Z4 représentés sur la figure 2, qui ont été déterminés par l'algorithme de synthèse des vibrations. On souhaite dans la zone Z1, un déplacement de type sinus fenêtré « burst » de 5 cycles d'oscillation à 300 Hz, et aucun déplacement dans les zones Z2 à Z4, i.e. aucune vibration.

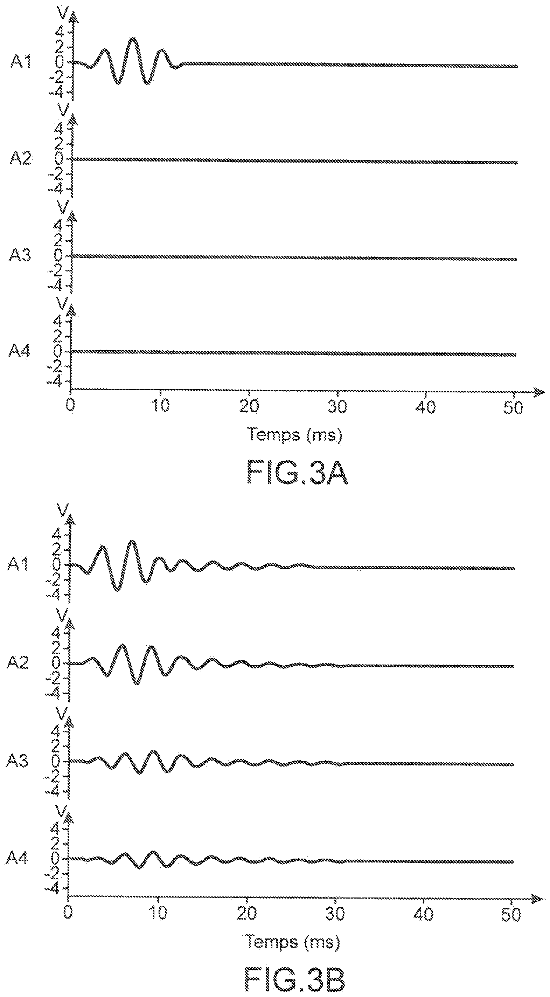

Sur la figure 3A, on peut voir les signaux de contrôle en Volt en fonction du temps en ms émis et envoyés aux actionneurs A1, A2, A3 et A4 dans une interface tactile de l'état de la technique. Seul un signal est envoyé à l'actionneur A1 qui est identique au déplacement souhaité et aucun signal n'est envoyé aux actionneurs A2, A3 et A4.

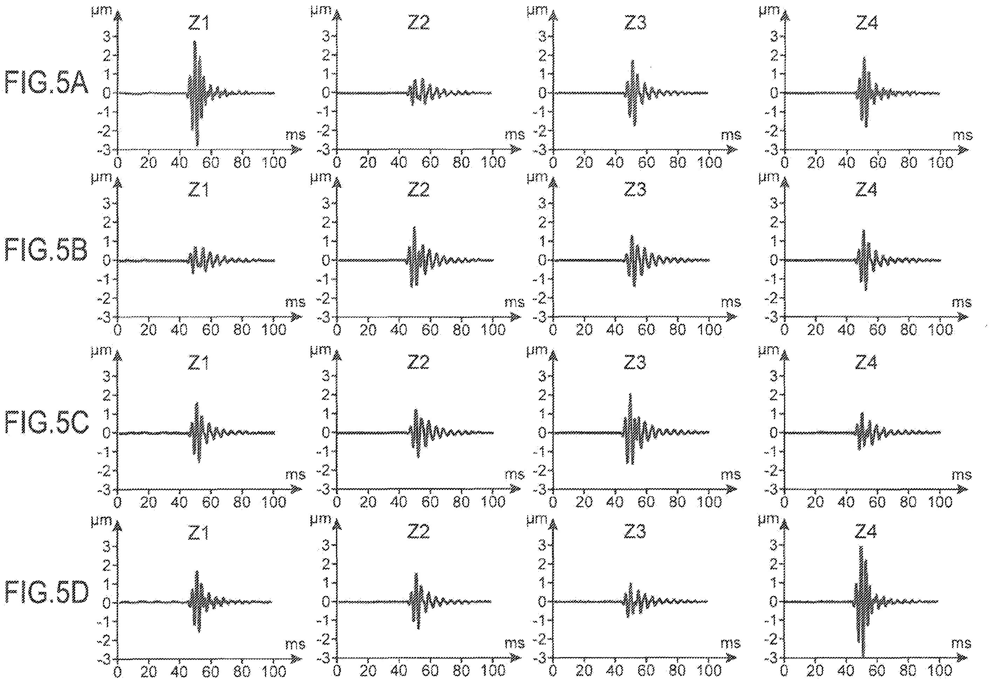

Sur les figures 5A, on peut voir les déplacements mesurés en μm en fonction du temps en ms dans les zones Z1, Z2, Z3 et Z4 résultant des signaux de la figure 3A.

On constate que, d'une part, le déplacement mesuré dans la zone Z1 correspond au signal de contrôle déformé et présente des oscillations supplémentaires dues aux réflexions des ondes produites par la plaque et leur propagation, il ne correspond donc pas au déplacement souhaité représenté sur la figure 2.

D'autre part, on constate que des déplacements non nuls sont mesurés dans les zones Z2 à Z4, alors qu'aucun déplacement n'était souhaité dans ces zones. En outre, ces déplacements ne sont pas négligeables. Ainsi si un utilisateur a un ou plusieurs doigts sur les zones Z2, Z3 et/ou Z4, il ressentira une stimulation tactile non désirée. Il pourra alors percevoir une fausse information.

Les représentations graphiques des figures 5B, 5C et 5D montrent les déplacements mesurés dans toutes les zones lors de l'activation des actionneurs A2, A3 et A4 respectivement en appliquant le signal de la figure 3A qui était appliqué à A1.

On constate donc qu'en appliquant un signal de contrôle qui correspond directement au déplacement souhaité, il y a d'une part une différence entre le déplacement souhaité en une zone et le déplacement obtenu, et d'autre que des stimulations tactiles non désirées sont générées.

Selon l'invention, les moyens de calcul mettent en œuvre un filtrage inverse, ce qui permet de mieux maîtriser les déplacements dans chacune des zones, que ces déplacements soient nuls ou non.

Sur la figure 3B, on peut voir les signaux de contrôle émis et envoyés aux actionneurs A1, A2, A3 et A4 dans une interface tactile selon l'invention pour obtenir le déplacement souhaité de la figure 2. Tous les actionneurs sont activés et pas uniquement l'actionneur A1 et le signal envoyé à A1 n'est pas identique au déplacement souhaité, il est complexe et est tel qu'il compense les effets des autres actionneurs et les effets de réflexion.

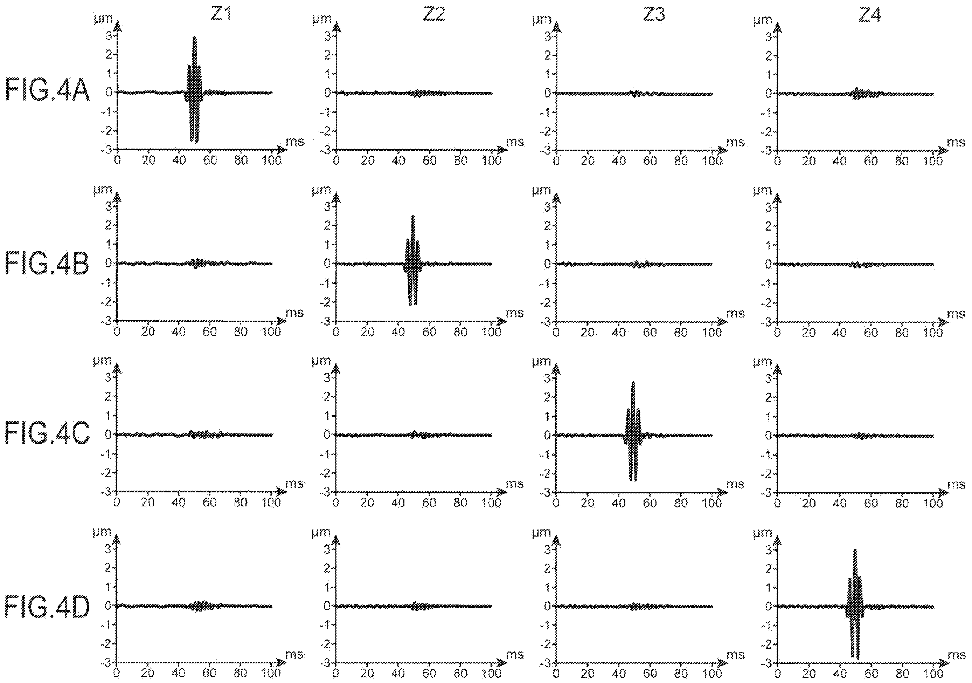

Sur la figure 4A, on peut voir les déplacements mesurés résultants des signaux de la figure 3B dans chaque zone Z1 à Z4 On constate que le déplacement mesuré en Z1 correspond à celui souhaité et que les déplacements mesurés dans les autres zones où aucun déplacement n'est souhaité sont quasiment nuls. Ainsi si l'utilisateur pose son doigt sur l'une des zones Z2 à Z4 il ne ressent pas ou alors très peu de stimulation tactile. L'information transmise à l'utilisateur est donc correcte.

Les figures 4B à 4D montrent les déplacements mesurés dans toutes les zones lors de l'activation des actionneurs A2, A3 et A4 respectivement en appliquant le signal de la figure 3B qui était appliqué à A1. On constate que les déplacements mesurés en Z2, Z3 et Z4 correspondent à ceux souhaités, et que les déplacements mesurés dans les autres zones où aucun déplacement n'est souhaité sont quasiment nuls.

Grâce à l'opération de filtrage inverse, les signaux de contrôle sont tels que pour les zones pour lesquelles on ne souhaite aucune stimulation, ils activent les actionneurs correspondant à ces zones, au moins ceux sous les zones avec lesquelles un doigt est en contact, de sorte qu'il génère des vibrations visant à annuler celles résultant par propagation de l'activation de l'actionneur sous la zone où l'on souhaite générer une stimulation.

Le calcul du signal de commande de l'actionneur sous la zone où l'on souhaite générer une stimulation prend en compte à la fois le déplacement souhaité et l'effet de la propagation et de la réflexion des vibrations produites par les autres actionneurs. Selon l'invention, chaque actionneur est donc contrôlé en tenant compte de l'environnement extérieur.

On peut alors obtenir, en chaque zone couverte par un actionneur, un déplacement qui peut être nul, corrigé d'effets de distorsions et réverbérations, et indépendant des déplacements au centre des autres zones.

Nous allons décrire l'opération de filtrage inverse. Une telle opération est par exemple décrite dans l'article « Optimal focusing by spatio-temporal inverse filter. I. Basic principles » M.Tanter et al., The Journal of the Acoustical Society of America 110, 37 (2001) appliquée au traitement d'image en imagerie médicale.

La réponse R d'un système linéaire à une excitation E est donnée par la relation $R=H.E,$ avec H la fonction de transfert du système. Dans l'application à une interface tactile, on observe le déplacement $U_i$ de la plaque mesuré au centre d'un actionneur i en réponse à un signal $S_j$ envoyé à un actionneur j. On a donc :

$$U_i(\omega) = H_{ij}(\omega)S_j(\omega)$$

Avec $H_{ij}(\omega)$ la fonction de transfert entre le signal envoyé à l'actionneur *i* et le déplacement enregistré au centre de l'actionneur *j*. Si N actionneurs émettent simultanément, le déplacement obtenu est la somme des contributions de ces *N* actionneurs, soit :

$$U_j(\omega) = \sum_{i=1}^{N} H_{ij}(\omega)S_j(\omega)$$

Sous forme matricielle on écrit :

$$\begin{bmatrix} U_1 \\ U_2 \\ \vdots \\ U_N \end{bmatrix}_\omega = \begin{bmatrix} H_{11} & H_{12} & \cdots & H_{1N} \\ H_{21} & H_{22} & \cdots & H_{2N} \\ \vdots & \vdots & \ddots & \vdots \\ H_{N1} & H_{N2} & \cdots & H_{NN} \end{bmatrix}_\omega \cdot \begin{bmatrix} S_1 \\ S_2 \\ \vdots \\ S_N \end{bmatrix}_\omega$$

ou

$$\mathbb{U}_\omega = \mathbb{H}_\omega \cdot \mathbb{S}_\omega$$

Le déplacement $u_i$ au centre d'un actionneur *i* n'est donc pas proportionnel au signal $s_i$ qui lui est appliqué mais est filtré par la réponse de l'actionneur collé à la plaque $H_{ii}$ et dépend, via les termes $H_{ij}$, des signaux envoyés aux autres actionneurs qui produisent des ondes se propageant dans toute la plaque.

Le filtrage inverse consiste à inverser cette relation en calculant le signal à appliquer à l'ensemble des actionneurs pour obtenir le déplacement souhaité.

$$\mathbb{V}_\omega = \begin{bmatrix} V_1 \\ V_2 \\ \vdots \\ V_N \end{bmatrix}_\omega$$

En notant $\begin{bmatrix} V_1 \\ V_2 \\ \vdots \\ V_N \end{bmatrix}_\omega$ le déplacement souhaité, dans le domaine fréquentiel, à l'ensemble des positions,

$$\mathbb{S}_\omega = \begin{bmatrix} S_1 \\ S_2 \\ \vdots \\ S_N \end{bmatrix}_\omega$$

on calcule le signal $\begin{bmatrix} S_1 \\ S_2 \\ \vdots \\ S_N \end{bmatrix}_\omega$ à envoyer à chacun des actionneurs par la relation :

$$\mathbb{S}_\omega = \mathbb{H}_\omega^{-1}.\,\mathbb{V}_\omega$$

On obtient finalement un déplacement $\mathbb{U}_\omega$ donné par :

$$\mathbb{U}_\omega = \mathbb{H}_\omega.\,\mathbb{S}_\omega = \mathbb{H}_\omega.\,\mathbb{H}_\omega^{-1}.\,\mathbb{V}_\omega = \mathbb{V}_\omega$$

On obtient ainsi un déplacement conforme à celui attendu $\mathbb{U}_\omega = \mathbb{V}_\omega$.

En inversant la matrice, on compense l'ensemble des effets, avant génération des signaux de contrôle pour obtenir le déplacement souhaité malgré les distorsions, les réverbérations et les propagations des ondes.

Ce filtre est temporel dans la mesure où il opère une transformation sur l'amplitude et la phase à toutes les fréquences, et spatial puisqu'il prend en compte les signaux émis par l'ensemble des actionneurs.

De préférence, l'interface comporte des moyens de détection 10 pour détecter la présence d'un doigt sur une zone pour, d'une part, déterminer si une stimulation est à générer et, d'autre part, pour activer les actionneurs sous les zones qui ne doivent pas être activés. Les moyens de détection mis en œuvre sont ceux mis en œuvre habituellement dans le domaine tactile, par exemple ils sont du type capacitif, résistif, infrarouge... En variante, on peut se contenter de ne détecter que le doigt sur la zone de stimulation et commander les actionneurs de toutes les autres zones afin de limiter, voire annuler leur déplacement. Cependant cette activation est consommatrice d'énergie et de puissance de calcul.

Selon une autre variante, l'interface ne comporte pas de moyens de détection de la présence d'un doigt, on peut alors produire une vibration en une zone sans savoir si effectivement un doigt se trouve sur cette zone. Le contrôle des vibrations se fait alors en supposant que toutes les positions sont touchées.

De manière avantageuse, l'interface comporte des moyens 11 de mesure de la force d'appui des doigts sur les zones, la valeur de la force d'appui peut alors avantageusement être prise en compte pour simuler plus fidèlement la réponse d'une touche ou d'un bouton. Les moyens de mesure de la force sont par exemples des piézoélectriques, piézorésistifs, capacitifs... la valeur de force d'appui est prise en compte par l'algorithme de synthèse des vibrations pour déterminer le déplacement souhaité en une zone, et non lors de l'étape de filtrage inverse.

De manière également avantageuse, la vitesse du ou des doigts sur la surface tactile est également mesurée et prise en compte par l'algorithme de synthèse des vibrations déterminer forme du signal que l'on souhaite obtenir.

En prenant en compte la force d'appui et la vitesse des mouvements, la stimulation est alors plus réaliste.

Sur la figure 6, on peut voir une représentation schématique d'un exemple de fonctionnement des moyens de calcul et des moyens de contrôle d'un autre exemple d'interface tactile.

Dans cet exemple, l'interface comporte une pluralité d'actionneurs A1, A2, A3...AN de forme hexagonale pavant presque toute la face opposée à la surface tactile. Ainsi quelle que soit la position des doigts sur la surface tactile, le déplacement de la zone avec laquelle un doigt est en contact peut être maîtrisé par activation de l'actionneur situé sous cette zone.

Sur la figure 6, trois stimulations tactiles sont produites en trois zones distinctes, celles-ci peuvent être identiques ou différentes. Trois doigts D1, D2, D3 sont en contact de la surface tactile en trois zones distinctes Z1, Z2, Z3. En effet le calcul des signaux de contrôle peut se faire lorsque l'on souhaite stimuler en au moins deux zones distinctes. Dans ce mode de fonctionnement, le déplacement de zones est maintenu nul sauf les zones Z1, Z2 et Z3. Le calcul des signaux de contrôle s'effectue en appliquant un filtrage inverse.

La présence des doigts sur les zones Z1, Z2 et Z3 est détectée et éventuellement leur force d'appui sur les zones Z1, Z2 et Z3 est mesurée.

A chaque zone est ou sont associée(s) une ou plusieurs stimulations stockées dans une mémoire des moyens de contrôle, cette stimulation peut varier en fonction par exemple de la force d'appui. Par exemple, la stimulation peut être telle qu'elle reproduit le déplacement d'une touche de clavier qui s'enfonce, d'un bouton de validation, type clique ; les vibrations transitoires produites lors de l'appui sur une surface déformable peuvent également être restituées. On peut voir que l'écran comporte des motifs correspondant à des commandes différentes.

Les moyens de contrôle font une synthèse des informations recueillis (étape 200), et déterminent ensuite la vibration souhaitée (étape 300) qui a été associée à une stimulation lors de la programmation de l'interface.

Les vibrations souhaitées servent ensuite d'entrée (étape 400) au filtre inverse des moyens de calcul 8 qui déterminent les signaux de contrôle au moins des actionneurs A1, A2 et A3 (étape 500). Les signaux sont avantageusement amplifiés et sont ensuite envoyés aux actionneurs A1, A2 et A3 (étape 600). Ils produisent alors un retour vibrotactile conforme (étape 700).

L'interface selon l'invention peut ne comporter qu'un seul actionneur, en effet le calcul du signal de contrôle de l'unique actionneur par filtration inverse permet de compenser la distorsion du signal due à la réponse de l'actionneur à sa propre mise en vibration et à la réverbération des ondes dans la surface.

L'interface selon l'invention permet de travailler à toutes fréquences et pas uniquement aux fréquences de sensibilité tactile inférieure à 1 kHz, cependant celles-ci sont avantageuses car elles ne produisent pas de son lors de l'activation des actionneurs. Ainsi différents types d'actionneurs peuvent être utilisés. Les actionneurs piézoélectriques sont adaptés à des fonctionnements haute et basse fréquence.

Un actionneur piézoélectrique comporte un matériau piézoélectrique sous forme de plaque, par exemple du PZT (Titano-Zirconate de Plomb) ou de l'AlN (Nitrure d'aluminium), et des électrodes de part et d'autre de la plaque et en contact avec celle-ci, pour lui appliquer un courant provoquer la déformation du matériau piézoélectrique.

Grâce à l'invention, il est également possible de donner un profil contrôlé à la surface. En effet, une déformation permanente de la surface peut être vue comme une vibration de fréquence nulle. On peut donc appliquer le procédé de filtre inverse. En exerçant un effort localisé sur une plaque, l'ensemble de la surface est déformé. En appliquant le procédé de filtre inverse, on peut annuler cette déformation aux points souhaités.

Des actionneurs électromagnétiques sont envisageables. Ils sont adaptés à un fonctionnement à basse fréquence. De tels actionneurs sont par exemple décrit dans le document Benali-Khoudja et al. - 2007 - VITAL An electromagnetic integrated tactile display ». Les actionneurs comportent par exemple chacun une bobine fixe et une aimant collé sous la surface tactile. Le signal de courant envoyé dans les bobines est calculé par filtrage inverse.

Sur les figures 7A à 7D, on peut voir plusieurs exemples de structure d'interface tactile applicables à la présente invention.

La figure 7A, les actionneurs A1, A2...AN sont fixés, par exemple par collage directement sur la face de la plaque 1 opposée à la surface tactile 2. Cette structure est adaptée à la réalisation d'un pavé tactile, en effet les actionneurs n'étant en général pas transparents. Dans le cas d'un pavé tactile la surface tactile est généralement opaque.

Sur la figure 7B, l'interface comporte une plaque 1 munie d'actionneurs comme sur la figure 6A, et un écran E à l'opposé de la plaque tactile. Dans cette structure, on choisit avantageusement des actionneurs transparents, par exemple des actionneurs piézoélectriques déposés en couche mince.

Sur la figure 7C, l'interface comporte une plaque transparente 1, un écran E disposé directement sous la plaque 1 et solidaire de celle-ci, il est par exemple collé à la plaque 1, et des actionneurs A1...AN fixés sur l'écran sur la face opposée à celle orientée du côté de la plaque. Cette configuration présente l'avantage de ne pas nécessiter d'actionneurs transparents. Dans cet exemple, les actionneurs agissent sur la surface tactile à travers l'écran. L'écran est par exemple un écran OLED qui présente l'avantage d'être très fin et est généralement collé directement à la plaque tactile. Cet assemblage présente l'avantage d'offrir une bonne transmission des basses fréquences

Sur la figure 7D, l'interface comporte une plaque 1 et de actionneurs piézoélectriques A1 à AN sur la face opposée à la surface tactile. Les actionneurs comportent en commun une couche de matériau piézoélectrique 12, une électrode commune 14 entre la couche 12 et la plaque 1 et des électrodes 16 sur la face opposée de la couche 12 de sorte à réaliser des actionneurs individuels.

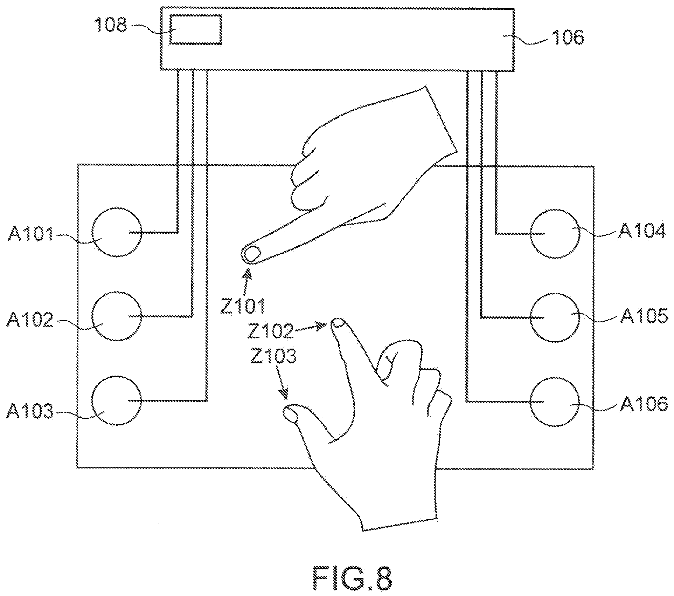

Sur la figure 8, on peut voir une vue de dessus d'une interface tactile selon un deuxième mode de réalisation.

Dans ce mode de réalisation, le ou les doigts à stimuler, et donc les zones de la surface à stimuler ne sont pas situés au-dessus d'actionneurs.

Dans cet exemple les actionneurs A101 à A106 sont répartis le long des bords de la surface tactile, trois sur chaque bord. Les doigts sont destinés à entrer en contact avec des zones de la surface situées entre les deux rangées d'actionneurs. Ces zones Z101, Z102, Z103... sont des zones de stimulation potentielles. La disposition des actionneurs de la figure 8 n'est pas limitative, tout autre disposition est envisageable, par exemple une répartition le long des quatre bords de la plaque, ou sur deux bords non parallèle, une répartition non symétrique, une répartition en cercle dans le cas d'une surface circulaire...

Les actionneurs peuvent être disposés sur ou sous la surface, par exemple collés à la surface.

Ce mode de réalisation est très avantageux dans une application à un écran car il ne requiert pas la mise en œuvre d'actionneurs transparents.

De manière préférée, les actionneurs sont disposés sous l'ensemble de la surface d'interaction. Cette disposition permet de minimiser la distance entre les points de contrôle où peuvent être situés les doigts, et les actionneurs.

Les zones de stimulation potentielles sont situées dans le champ proche des actionneurs, i.e. les zones de stimulation potentielles sont situées à une distance au inférieure ou égale à la dimension des actionneurs dans le plan ou à la longueur d'onde des signaux de contrôle envoyés aux actionneurs, la plus grande distance étant considérée.

Cette configuration en champ proche permet un contrôle efficace en réduisant la puissance des signaux émis pour obtenir des déplacements donnés, notamment lorsque les points de contrôle sont distants de moins d'une longueur d'onde les uns des autres.

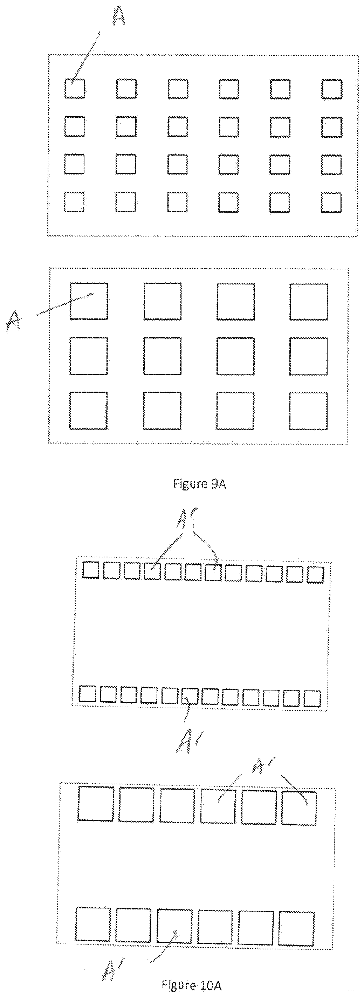

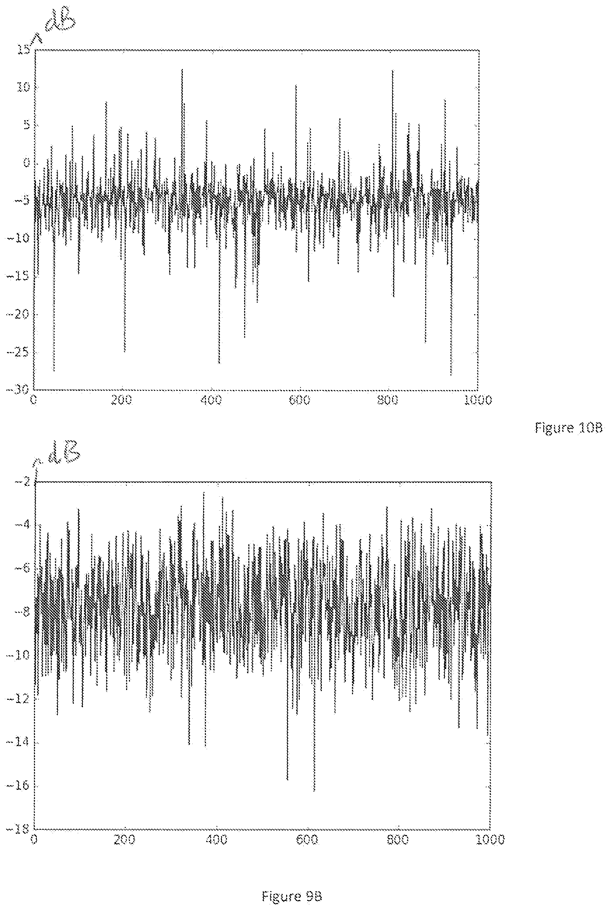

Sur la figure 9B, on peut voir le ratio d'énergie en dB de l'ensemble des signaux de pilotage nécessaire au contrôle de deux points disposés aléatoirement sur la plaque pour les dispositions matricielles des actionneurs A de deux tailles différentes schématisées sur la figure 9A permettant de disposer les points de contrôle dans le champ proche des actionneurs selon l'invention

A titre de comparaison, sur la figure 10B, on peut voir le ratio d'énergie en dB de l'ensemble des signaux de pilotage nécessaire au contrôle de deux points disposés aléatoirement sur la plaque pour les dispositions des actionneurs A' de deux tailles différentes situés sur le bord de la plaque schématisées sur la figure 10A, et pour lesquels les points de contrôle ne sont pas dans le champ proche des actionneurs

Ces mesures ont été faites en utilisant une plaque de verre d'épaisseur 1 mm avec une bande de fréquence des signaux de pilotage couvrant la plage de sensibilité tactile 0-1kHz qui correspond à des longueurs d'ondes de 10 cm. Les actionneurs considérés sont des céramiques piézoélectriques de dimensions 10 mm et 20 mm. 1000 couples de points choisis aléatoirement mais identiques pour les deux simulations ont été testés. On constate une réduction moyenne de 5 et 8 dB respectivement pour les deux tailles d'actionneurs utilisés grâce à la disposition relative des actionneurs et des points de contrôle selon l'invention, par rapport à une disposition des actionneurs sur les bords de la plaque.

L'interface comporte également des moyens de contrôle 106 comprenant des moyens de calcul 108 mettant en œuvre une opération de filtrage inverse, dans laquelle la matrice regroupant les fonctions de transfert entre le signal envoyé à chaque actionneur et les déplacements enregistrés dans les différentes zones de stimulation potentielles, peut ne pas être une matrice carrée puisque le nombre d'actionneurs et le nombre de zones de stimulation potentielles peuvent être différents. Afin d'assurer la stabilité de l'inversion matricielle, le nombre d'actionneurs est supérieur ou égal au nombre maximal de zones à stimuler simultanément, i.e. dans le cas d'une interface utilisée avec une ou deux mains le nombre d'actionneur est supérieur ou égal au nombre maximal de doigts pouvant entrer en contact avec la surface, 5 ou 10 par exemples.

De préférence, l'interface comporte des moyens pour détecter le contact des doigts sur les différentes zones de la surface.

Comme pour le premier mode de réalisation, la commande des actionneurs utilise une matrice $H(\omega)$ établie à partir des fonctions de réponse en fréquences $H_{pq}(\omega)$ liant les Q actionneurs à chacun des P doigts.

Ces fonctions de réponse en fréquence peuvent être obtenues à partir d'une base de données de réponses ou interpolées à partir d'une base réduite de réponses.

On calcule ensuite la matrice $\mathbb{H}_\omega^{-1}$ qui est une pseudo-inverse de la matrice $\mathbb{H}_\omega$, car la matrice peut ne pas être carrée, pour chaque fréquence de la bande passante.

Le mode de fonctionnement des moyens de contrôle est le suivant, en considérant une interface à Q actionneurs et avec P doigts susceptibles de venir en contact avec la surface de l'interface.

Tout d'abord la position du ou des doigts sur la surface d'interaction sont déterminées par des moyens de détection similaires à ceux décrits ci-dessus en relation avec le premier mode de réalisation.

Suivant le type d'interaction tout ou partie des doigts sur la surface sont stimulés. Lors d'une étape suivante, on détermine des vibrations $v_p(t)$ souhaitées sous chacun des P doigts. Ces vibrations sont des signaux arbitraires préalablement déterminés en fonction de l'information à fournir, éventuellement nuls, déterminés de sorte à produire un retour haptique perceptible par l'utilisateur et adapté au contexte d'interaction.

Lors d'une étape suivante, on effectue un filtrage des vibrations souhaitées par la matrice inverse $\mathbb{H}_\omega^{-1}$ pour obtenir les signaux de pilotage des actionneurs.

Lors d'une étape suivante, les signaux $s_q(t)$ de commande de Q actionneurs sont émis et envoyés aux actionneurs.

Par exemple, on souhaite que le doigt D1 soit stimulé et que les autres doigts D2 et D3 ne soient pas stimulés. Tous les actionneurs A101 à A06 sont pilotés pour générer la stimulation dans la zone Z101 et pour contrer toute vibration pouvant apparaître dans les zones Z102 et Z103 et pour optimiser la stimulation dans la zone Z101.

Le mode de fonctionnement de l'interface selon le deuxième de réalisation est proche de celui de l'interface selon le premier mode.

Comme pour le premier mode de réalisation, les stimulations à générer peuvent être modulées par exemple en fonction de la force d'appui du ou des doigts sur la surface. En variante, le dispositif peut ne pas comporter de moyens de détection du ou des contacts d'un ou plusieurs doigts ou autres membre.

En variante, l'interface comporte un seul actionneur.

Dans un autre mode de réalisation, l'interface est telle que les zones de stimulation potentielles sont situées au-dessus des actionneurs ou non. Le nombre d'actionneurs est choisi supérieur au nombre de zones de stimulation potentielles.

La présente invention est particulièrement adaptée à l'interaction homme machine avec une surface tactile. La présente invention peut également être mise en œuvre dans des applications en optique adaptative ou en micromanipulation, qui requiert un contrôle élevé des déformations et des vibrations d'une surface.

La présente invention s'applique également à des interfaces dont la surface n'est pas plane, i.e. elle s'applique à des interfaces comportant des surfaces courbes complexes, par exemple de type coque.

## Revendications

1. Dispositif surfacique à déformation localisée comportant une plaque portant une surface d'interaction avec un ou plusieurs éléments d'interaction extérieurs, comportant des zones d'interaction avec l'extérieur, des actionneurs apte à provoquer une déformation dans une direction orthogonale au plan de la plaque au niveau des zones d'interaction des moyens de détection du contact entre les zones d'interaction et un élément d'interaction extérieur, des moyens de contrôle des actionneurs configurés pour envoyer des signaux de contrôle aux actionneurs, comprenant des moyens de calcul desdits signaux de contrôle, lesdits moyens de calcul mettant en œuvre une opération de filtrage inverse, de sorte à émettre, à partir d'un déplacement souhaité d'au moins l'une des zones d'interaction, des signaux de contrôle compensant au moins partiellement la distorsion, la réverbération et la propagation des ondes, le dispositif **se caractérisant en ce que** chacune des zones d'interaction est dans le champ proche d'au moins un des actionneurs en étant située à une distance inférieure ou égale à la longueur d'onde des signaux de contrôle envoyés aux actionneurs et/ou aux dimensions des actionneurs dans les directions de la surface d'interaction.

2. Dispositif selon la revendication 1, dans lequel les zones d'interaction sont disposées les unes par rapport aux autres, de sorte qu'elles couvrent sensiblement toute la surface d'interaction et les actionneurs, lesdits moyens de calcul mettant en œuvre une opération de filtrage inverse, de sorte à émettre, à partir d'un ou de déplacements souhaités d'une ou plusieurs zones d'interaction, des signaux de contrôle compensant au moins partiellement la distorsion, la réverbération et la propagation des ondes, par exemple la surface d'interaction comportant plusieurs zones d'interaction disposées les unes par rapport aux autres, de sorte qu'elles couvrent sensiblement toute la surface d'interaction et au moins autant d'actionneurs que de zones d'interaction, lesdits moyens de calcul mettant en œuvre une opération de filtrage inverse, de sorte à émettre, à partir d'un ou de déplacements souhaités d'une ou plusieurs zones d'interaction, des signaux de contrôle compensant au moins partiellement la distorsion, la réverbération et la propagation des ondes.

3. Dispositif selon la revendication 1 ou 2, dans lequel la surface des actionneurs est comprise entre 1 cm$^2$ et quelques cm$^2$.

4. Dispositif selon l'une des revendications 1 à 3, dans lequel les actionneurs sont disposés sous lesdites zones d'interaction, à l'opposé de la surface d'interaction.

5. Dispositif selon l'une des revendications 1 à 4, dans lequel les zones d'interaction sont distantes du ou des actionneurs dans le plan de la surface d'interaction.

6. Dispositif selon l'une des revendications 1 à 5, comportant des moyens de détection du contact entre le ou les éléments d'interaction extérieurs et toutes les zones d'interaction.

7. Dispositif selon l'une des revendications 1 à 6, comportant des moyens de mesure de la force d'appui du ou des éléments extérieurs avec les zones d'interaction.

8. Dispositif selon l'une des revendications 1 à 7 pris en combinaison avec la revendication 2, dans lequel les zones d'interaction et les actionneurs ont une forme d'hexagone.

9. Dispositif selon l'une des revendications 1 à 8, dans lequel les actionneurs sont des actionneurs piézoélectriques, les actionneurs comportant avantageusement des films minces transparents.

10. Dispositif selon l'une des revendications 1 à 8, dans lequel les actionneurs sont des actionneurs électromagnétiques comportant chacun une bobine et un aimant, l'aimant ou la bobine étant apte à exercer un effort sur la plaque.

11. Dispositif selon l'une des revendications 1 à 10, comportant un écran disposé sous la plaque à l'opposé de la surface d'interaction, l'écran étant avantageusement fixé à la plaque à l'opposé de la surface interaction, les actionneurs étant avantageusement fixés sur l'écran à l'opposé de la face de l'écran en contact avec la plaque.

12. Interface de stimulation tactile comportant un dispositif selon l'une des revendications 1 à 11 ou pavé tactile comportant un dispositif selon l'une des revendications 1 à 10 dans lequel une partie au moins de chaque actionneur est fixée directement à la plaque.

13. Procédé de fonctionnement d'un dispositif surfacique à déformation localisée comportant une plaque portant une surface d'interaction avec un ou plusieurs éléments extérieurs, comportant plusieurs zones d'interactions avec l'extérieur, plusieurs actionneurs en contact avec la surface d'interaction et apte(s) à provoquer une déformation dans une direction orthogonale au plan de la plaque,

le procédé comportant :

- détection d'un ou plusieurs contacts entre lesdites zones d'interaction et les éléments d'interaction,
- choix d'un déplacement souhaité pour chacune desdites zones d'interaction,
- génération de signaux de contrôle par une opération de filtrage inverse à partir des déplacements souhaités,
- application des signaux de contrôle à au moins un des actionneurs,

et avantageusement dans lequel tout ou partie des actionneurs sont disposés sous les zones d'interaction et dans lequel des signaux de contrôle sont appliqués à tout ou partie des actionneurs situés sous une zone d'interaction avec laquelle un contact avec un élément extérieur a été détecté, le procédé **se caractérisant en ce que** chacune desdites zones d'interaction est située dans le champ proche d'au moins un des actionneurs en étant située à une distance inférieure ou égale à la longueur d'onde de signaux de contrôle envoyés audit au moins un actionneur et/ou aux dimensions dudit au moins un actionneur dans les directions de la surface d'interaction.

**Patentansprüche**

1. Flächige Vorrichtung mit lokalisierter Verformung, die eine Platte beinhaltet, die eine Wechselwirkungsoberfläche mit einem oder mehreren äußeren Wechselwirkungselementen trägt, die Wechselwirkungszonen mit dem Äußeren beinhalten, Stellantriebe, die imstande sind, eine Verformung in einer orthogonalen Richtung zur Ebene der Platte im Bereich der Wechselwirkungszonen der Mittel zum Erkennen des Kontakts zwischen den Wechselwirkungszonen und einem äußeren Wechselwirkungselement zu bewirken, Mittel zum Steuern der Stellantriebe, die konfiguriert sind, um Steuersignale an die Stellantriebe zu senden, die Mittel zum Berechnen der Steuersignale umfassen, wobei die Mittel zum Berechnen eine inverse Filteroperation umsetzen, um aus einer gewünschten Verschiebung mindestens einer der Wechselwirkungszonen Steuersignale auszugeben, welche die Verzerrung, die Rückstrahlung und die Ausbreitung der Wellen zumindest teilweise kompensieren, wobei die Vorrichtung **dadurch gekennzeichnet ist, dass** sich jede der Wechselwirkungszonen im Feld nahe mindestens eines der Stellantriebe befindet, indem sie in einem Abstand kleiner oder gleich der Wellenlänge der Steuersignale liegt, die an die Stellantriebe gesendet werden, und/oder den Abmessungen der Stellantriebe in den Richtungen der Wechselwirkungsoberfläche.

2. Vorrichtung nach Anspruch 1, wobei die Wechselwirkungszonen so zueinander angeordnet sind, dass sie im Wesentlichen die gesamte Wechselwirkungsoberfläche und die Stellantriebe bedecken, wobei die Mittel zum Berechnen eine inverse Filteroperation umsetzen, um aus einer oder mehr gewünschten Verschiebungen einer oder mehrerer Wechselwirkungszonen Steuersignale auszugeben, welche die Verzerrung, die Rückstrahlung und die Ausbreitung der Wellen zumindest teilweise kompensieren, wobei die Wechselwirkungsoberfläche beispielsweise mehrere Wechselwirkungszonen beinhaltet, die so zueinander angeordnet sind, dass sie im Wesentlichen die gesamte Wechselwirkungsoberfläche und mindestens so viele Stellantriebe wie Wechselwirkungszonen bedecken, wobei die Mittel zum Berechnen eine inverse Filteroperation umsetzen, um aus einer oder mehr gewünschten Verschiebungen einer oder mehrerer Wechselwirkungszonen Steuersignale auszugeben, welche die Verzerrung, die Rückstrahlung und die Ausbreitung der Wellen zumindest teilweise kompensieren.

3. Vorrichtung nach Anspruch 1 oder 2 wobei die Oberfläche der Stellantriebe zwischen 1 cm$^2$ und einigen cm$^2$ umfasst ist.

4. Vorrichtung nach einem der Ansprüche 1 bis 3, wobei die Stellantriebe unter den Wechselwirkungszonen entgegengesetzt zur Wechselwirkungsoberfläche angeordnet sind.

5. Vorrichtung nach einem der Ansprüche 1 bis 4, wobei die Wechselwirkungszonen von dem oder den Stellantrieben in der Ebene der Wechselwirkungsoberfläche beabstandet sind.

6. Vorrichtung nach einem der Ansprüche 1 bis 5, die Mittel zum Erkennen des Kontakts zwischen dem oder den äußeren Wechselwirkungselementen und allen Wechselwirkungszonen beinhaltet.

7. Vorrichtung nach einem der Ansprüche 1 bis 6, die Mittel zum Messen der Abstützkraft des oder der äußeren Elemente mit den Wechselwirkungszonen beinhaltet.

8. Vorrichtung nach einem der Ansprüche 1 bis 7, in Kombination mit Anspruch 2, wobei die Wechselwirkungszonen und die Stellantriebe eine Form eines Sechsecks aufweisen.

9. Vorrichtung nach einem der Ansprüche 1 bis 8, wobei die Stellantriebe piezoelektrische Stellantriebe sind, wobei die Stellantriebe vorteilhafterweise transparente dünne Filme beinhalten.

10. Vorrichtung nach einem der Ansprüche 1 bis 8, wobei die Stellantriebe elektromagnetische Stellantriebe sind, die jeweils eine Spule und einen Magneten beinhalten, wobei der Magnet oder die Spule imstande ist, Druck auf die Platte auszuüben.

11. Vorrichtung nach einem der Ansprüche 1 bis 10, die einen Schirm beinhaltet, der unter der Platte entgegengesetzt zur Wechselwirkungsoberfläche angeordnet ist, wobei der Schirm vorteilhafterweise an der Platte entgegengesetzt zur Wechselwirkungsoberfläche fixiert ist, wobei die Stellantriebe vorteilhafterweise am Schirm entgegengesetzt zur Seite des Schirms in Kontakt mit der Platte fixiert sind.

12. Taktile Stimulationsschnittstelle, die eine Vorrichtung nach einem der Ansprüche 1 bis 11 beinhaltet, oder Tastfeld, das eine Vorrichtung nach einem der Ansprüche 1 bis 10 beinhaltet, wobei mindestens ein Teil eines jeden Stellantriebs direkt an der Platte fixiert ist.

13. Verfahren zum Betreiben einer flächigen Vorrichtung mit lokalisierter Verformung, die eine Platte beinhaltet, die eine Wechselwirkungsoberfläche mit einem oder mehreren äußeren Elementen trägt, die mehrere Wechselwirkungszonen mit dem Äußeren beinhalten, mehrere Stellantriebe in Kontakt mit der Wechselwirkungsoberfläche und imstande, eine Verformung in einer orthogonalen Richtung zur Ebene der Platte zu bewirken, wobei das Verfahren beinhaltet:

- Erkennen eines oder mehrerer Kontakte zwischen den Wechselwirkungszonen und den Wechselwirkungselementen,
- Auswahl einer gewünschten Verschiebung für jede der Wechselwirkungszonen,
- Erzeugen von Steuersignalen durch eine inverse Filteroperation aus gewünschten Verschiebungen,
- Anwenden der Steuersignale an mindestens einen der Stellantriebe,
und wobei vorteilhafterweise alle Stellantriebe oder ein Teil davon unter den Wechselwirkungszonen angeordnet sind, und wobei die Steuersignale auf alle Stellantriebe oder einen Teil davon angewendet werden, die sich unter einer Wechselwirkungszone befinden, mit der ein Kontakt mit einem äußeren Element erkannt worden ist,

wobei das Verfahren **dadurch gekennzeichnet ist, dass** sich jede der Wechselwirkungszonen im Feld nahe mindestens eines der Stellantriebe befindet, indem sie in einem Abstand kleiner oder gleich der Wellenlänge von Steuersignalen liegt, die an den mindestens einen Stellantrieb gesendet werden, und/oder den Abmessungen des mindestens einen Stellantriebs in den Richtungen der Wechselwirkungsoberfläche.

## Claims

1. Surface device with localized deformation, including a plate carrying a surface for interaction with one or more external interaction elements, including zones for interaction with the exterior, actuators able to cause a deformation in a direction orthogonal to the plane of the plate at the interaction zones of the means for detecting contact between the interaction zones and an external interaction element, means for controlling the actuators configured to send control signals to the actuators, comprising means for computing said control signals, said computing means implementing an inverse filtering operation, so as to emit, from a required movement of at least one of the interaction zones, control signals at least partially compensating for the distortion, the reverberation and the propagation of the waves, the device being **characterized in that** each of the interaction zones is in a near field of at least one of the actuators while being located at a distance less than or equal to the wavelength of the control signals sent to the actuators and/or less than or equal to the dimensions of the actuators in the directions of the interaction surface.

2. Device according to claim 1, wherein the interaction zones are disposed with respect to one another so that they cover substantially the entire interaction surface and the actuators, said computing means implementing an inverse filtering operation, so as to emit, from one or more required movements of one or more interaction zones, control signals at least partially compensating for the distortion, the reverberation and the propagation of the waves, for example the interaction surface including a plurality of interaction zones disposed with respect to one another so that they cover substantially the entire interaction surface and at least as many actuators as there are interaction zones, said computing means implementing an inverse filtering operation, so as to emit, from one or more required movements of one or more interaction zones, control signals at least partially compensating for the distortion, the reverberation and the propagation of the waves.

3. Device according to claim 1 or 2, wherein the surface area of the actuators is between 1 cm$^2$ and a few cm$^2$.

4. Device according to one of claims 1 to 3, wherein the actuators are disposed under said interaction zones, opposite to the interaction surface.

5. Device according to one of claims 1 to 4, wherein the interaction zones are distant from the actuator or actuators in the plane of the interaction surface.

6. Device according to one of claims 1 to 5, including means for detecting the contact between the external interaction elements and all the interaction zones.

7. Device according to one of claims 1 to 6, including means for measuring the bearing force of the external element or elements with the interaction zones.

8. Device according to one of claims 1 to 7 taken in combination with claim 2, wherein the interaction zones and the actuators have a hexagon shape.

9. Device according to one of claims 1 to 8, wherein the actuators are piezoelectric actuators, the actuators advantageously including transparent thin films.

10. Device according to one of claims 1 to 8, wherein the actuators are electromagnetic actuators each including a coil and a magnet, the magnet or the coil being able to exert a force on the plate.

11. Device according to one of claims 1 to 10, including a screen disposed under the plate opposite to the interaction surface, the screen advantageously being secured to the plate opposite to the interaction surface, the actuators advantageously being secured to the screen opposite to the face of the screen in contact with the plate.

12. Touch stimulation interface including a device according to one of claims 1 to 11 or touch pad including a device according to one of claims 1 to 10, wherein at least part of each actuator is secured directly to the plate.

13. Method for operating a surface device with localized deformation including a plate carrying a surface for interaction with one or more external elements, including a plurality of zones for interaction with the exterior, a plurality of actuators in contact with the interaction surface and able to cause a deformation in a direction orthogonal to the plane of the plate,

    the method including:

- detecting one or more contacts between said interaction zones and the interaction elements,
- selecting a required movement for each of said interaction zones,
- generating control signals by an inverse filtering operation from the required movements,
- applying control signals to at least one of the actuators,

and advantageously wherein all or some of the actuators are disposed under the interaction zones and wherein control signals are applied to all or some of the actuators located under an interaction zone with which a contact with an external element has been detected, the method being **characterized in that** each of said interaction zones is located in a near field of at least one of the actuators while being located at a distance less than or equal to the wavelength of control signals sent to said at least one actuator and/or less than or equal to the dimensions of said at least one actuator in the directions of the interaction surface.

FIG.1

FIG.2

FIG.3A

FIG.3B

FIG.4A    FIG.4B    FIG.4C    FIG.4D

EP 3 729 241 B1

FIG.5A

FIG.5B

FIG.5C

FIG.5D

EP 3 729 241 B1

**FIG.6**

**FIG.7A**

**FIG.7B**

**FIG.7C**

**FIG.7D**

FIG.8

Figure 9A

Figure 10A

Figure 10B

Figure 9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011090167 A1

**Littérature non-brevet citée dans la description**

- **C. HUDIN** ; **J. LOZADA** ; **V. HAYWARD**. Localized Tactile Feedback on a Transparent Surface through Time-Reversal Wave Focusing. *IEEE Transactions on Haptics*, April 2015, vol. 8 (2), 188-198
- **H. NICOLAU** ; **K. MONTAGUE** ; **T. GUERREIRO** ; **A. RODRIGUES** ; **V. L. HANSON**. *HoliBraille: multipoint vibrotactile feedback on mobile devices*, 2015, 1-4
- **M.TANTER et al.** Optimal focusing by spatio-temporal inverse filter. I. Basic principles. *The Journal of the Acoustical Society of America*, 2001, vol. 110, 37
- **BENALI-KHOUDJA et al.** *VITAL An electromagnetic integrated tactile display*, 2007